# EUROPEAN PATENT APPLICATION

(11) **EP 3 006 185 A1**
(43) Date of publication of application: **13.04.2016**
(21) Application number: 13886074.7
(22) Date of filing: 29.05.2013
(51) Int. Cl.: B29C 47/20

(54) **METHOD AND DEVICE FOR FORMING LONG HOLLOW ARTICLES (VARIANTS)**

(71) Applicant: Obshchestvo s Ogranichennoy Otvetstvennostyu "Avtoklavy Vysokogo Davleniya I Temperatury", Moscow 105066 (RU)
(72) Inventor: GUBENKO, Lev Anatolyevich, 121002 Moscow (RU); PERELMAN, Vladimir Evseevich, 119571 Moscow (RU)
(74) Representative: Einsel, Martin
(86) International application number: PCT/RU2013/000437
(87) International publication number: WO 2014/193259

(57) **Abstract**

The invention relates to the production of long articles from powders of various materials, as well as from plasticized masses, by means of extrusion. A device for forming long hollow articles comprises an extruder and a forming attachment consisting of a die, a mandrel and an assembly for securing the mandrel inside the die. The working surfaces of the forming attachment are provided with one or more rows of profiled deformation elements disposed with an equal circumferential pitch on the working surfaces of the die and/or the mandrel. A blank of a plasticized material is forced through the mandrel securing assembly into an annular axisymmetric deformation region formed by the working surfaces of the mandrel and the die. In said region, the material undergoes additional drawing and deformation treatment prior to sizing. The design features of the device make it possible to realize cyclic drawing and compressive strains in an axial direction and in surfaces enveloping the working surfaces of the die and the mandrel across the entire length of the annular region, and cyclic compressive strains in a radial direction, as well as cyclic oppositely signed shear and flexural strains, resulting in uniform, intensive deformation treatment of the entire volume of material prior to the sizing of the blank. The invention provides improved physical and mechanical properties of the long hollow articles produced and an increase in the yield of finished product by virtue of an increase in the uniformity of the properties of the material across the cross-section of an article.

## Description

The present technical solution relates to the manufacture of long articles from powders of various materials, including polymeric materials, as well as plasticized masses, by means of the extrusion thereof.

It is known a method for forming long hollow articles from powdered and plasticized masses comprising forcing a blank through an annular axisymmetric deformation region, drawing out the material, shaping an article and calibrating the same ( Patent RU 2134640 C1, Int. Cl. D29C47/12, 1999).

It is known as well a device for implementing the above mentioned method, comprising an extruder and a shaping attachment consisting of a die, a mandrel and an assembly for securing the mandrel inside the die, the mandrel presenting longitudinal slots on its working surface (see above).

The known technical solution has the drawbacks as follows: a low level of physicomechanical properties of long hollow articles due to the non-uniformity of their structure, to a high number of defects contained in those areas of the material that were deformed when extruding the same through the assembly for securing the mandrel, and the resulting low yield of good products, in particular for articles produced at the material drawing up degrees inferior to 5.0.

Thus, the object of the present invention is to improve the level of physicomechanical characteristics of long hollow articles, to eliminate the operation of "healing" the defects of the material that are originated at the passage of the same through the assembly for securing the mandrel, and to increase the yield of good products thanks to the obtention of a uniform material structure in the articles.

The above defined object is achieved thanks to the fact that in the method for forming long hollow articles from powdered or plasticized masses, comprising forcing a blank through an annular axisymmetric deformation region, drawing out the material, shaping an article and calibrating the same, according to the invention, in the process of shaping the article, the material is submitted to an additional deformation processing comprising cyclic drawing up and setting deformations in the axial direction, and in the surfaces enveloping the working surfaces of the die and the mandrel along the entire length of the annular area cyclic setting deformations in the radial direction, as well as cyclic shearing and flexural strains in opposed-sign directions, the shearing strains being performed both in the planes passing through the axis of drawing up and in the planes orthogonal to said axis, the flexural strains being performed in the surfaces enveloping the working surfaces of the die and the mandrel and in the planes passing through the drawing up axis, the number of cycles for the additional deformation processing being equal to or more than one.

The above defined object is achieved as well with a device for forming long hollow articles from powdered or plasticized masses (according to the first embodiment), comprising an extruder and a shaping attachment consisting of a die, a mandrel and an assembly for securing the mandrel inside the die, in which, according to the invention, working surfaces of the die and the mandrel are provided with one or more rows of profiled deformation elements, the rows located on the working surfaces of the die and the mandrel at an equal distance from the assembly for securing the mandrel or at a linear shift from each other along the mandrel axis for no more than 3/2 lengths of the deformation elements forming at least one couple of rows, in each couple of rows the deformation elements are placed with an equal and uniform angular pitch and with a circumferential displacement of the die deformation elements with respect to the mandrel deformation elements up to the half of the circumferential pitch or without any circumferential displacement, and in each row, the distances from the profiled deformation elements to the assembly for securing the mandrel along the axis of the last are equal.

It is preferable to provide, on the working die or mandrel surfaces, two or more couples of rows of profiled deformation elements with the circumferential displacement of the deformation elements of each following couple of rows relative to the previous one for up to the half of an angular pitch or without any circumferential displacement.

Besides, the symmetry planes of the deformation elements can coincide with the planes passing by the mandrel axis or cross the mandrel axis at angles α that do not exceed 45°; in each couple of rows, said angles at the die deformation elements and at the mandrel deformation elements having opposite signs.

In a particular case, at least one couple of rows is formed by a part of rows, and at least one unpaired row is located on the die or on the mandrel, the angular pitch between the deformation elements of this at least one unpaired row being equal to the angular pitch between the deformation elements of the neighboring couple of rows, the deformation elements of at least one unpaired row being located with a circumferential displacement relative to the deformation elements of the corresponding previous row, said circumferential displacement not exceeding the half of the angular pitch, or without any displacement.

The above object is achieved as well with a device for forming long hollow articles from powdered or plasticized masses (according to the second embodiment), comprising an extruder and a shaping attachment consisting of a die, a mandrel and an assembly for securing the mandrel inside the die, in which, according to the invention, the working surfaces of the die and the mandrel are provided with one or more rows of profiled deformation elements at a uniform angular pitch.

It is preferable to provide, on the working die or mandrel surfaces, two or more couples of rows of profiled deformation elements located with an equal angular pitch and with a circumferential displacement of the elements of each following row relative to the previous one for up to the half of an angular pitch or without any circumferential displacement.

The symmetry planes of the deformation elements can coincide with the planes passing by the mandrel axis or cross the mandrel axis at angles α that do not exceed 45°.

Besides, when the working surface of the die or the mandrel contains two or more rows of deformation elements, the sign of the angle α in each following row changes to the opposite one.

An additional deformation processing of the formed material, before the calibration, with the use of the method and of the device embodiments, comprising cyclic deformations of drawing up and upsetting in a radial and axial directions, as well as the cyclic deformations of drawing up and upsetting with opposite signs, enables, even at a general drawing up degree of 1.8 to 2.0 of the material, to carry out an intensive uniform deformation treatment of the entire volume of the material supplied to form the article. Such a treatment provides for the elimination of pores and for "healing" other structural defects in the material supplied into the calibration area, and for obtaining a uniform structure of the same in the radial and axial directions.

The main procedures for implementing the claimed method are examined below on the basis of an embodiment and of the operation of the claimed devices for forming long hollow articles from powered and plasticized materials.

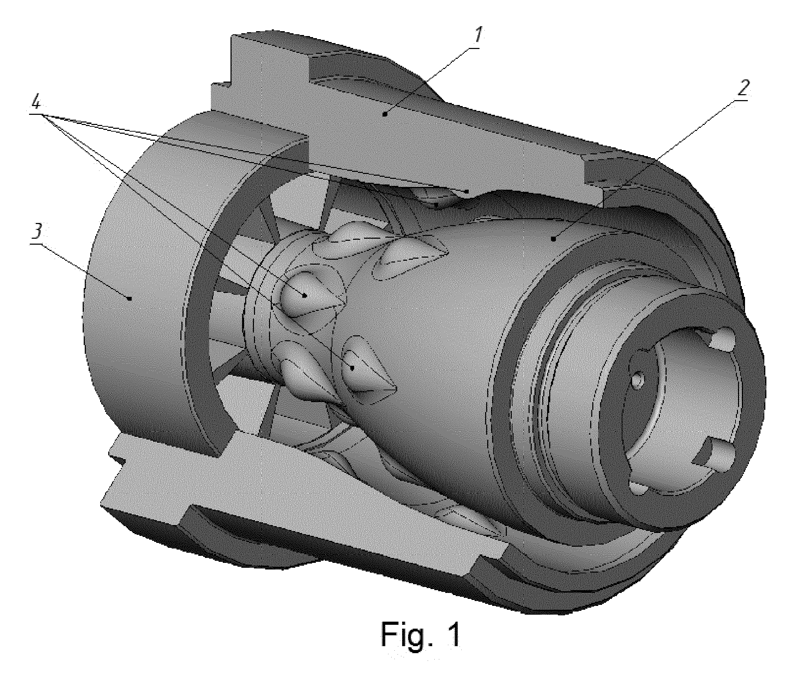

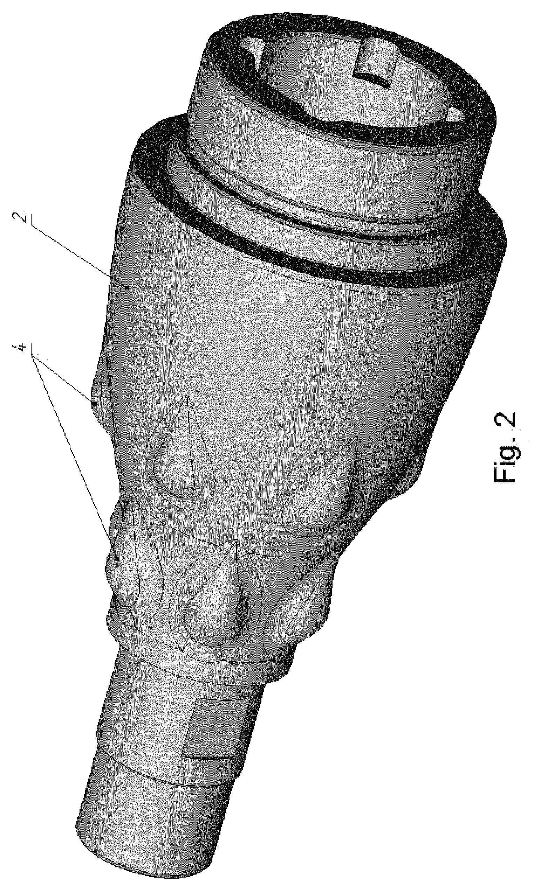

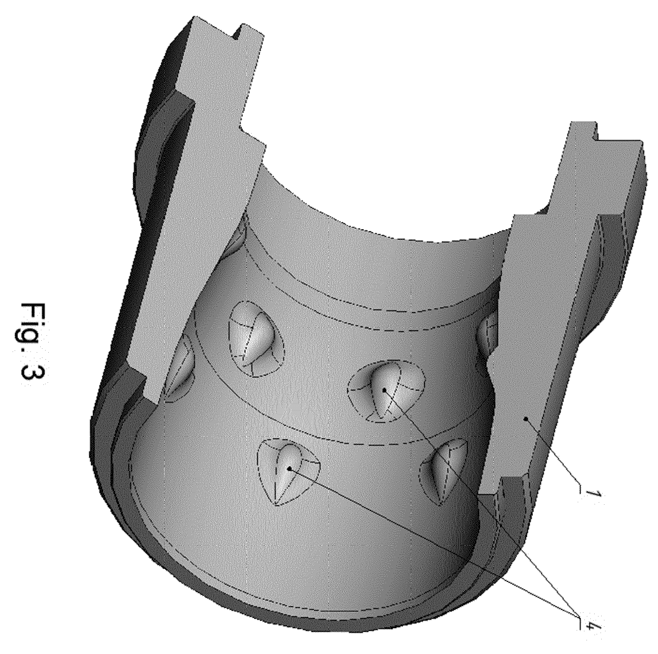

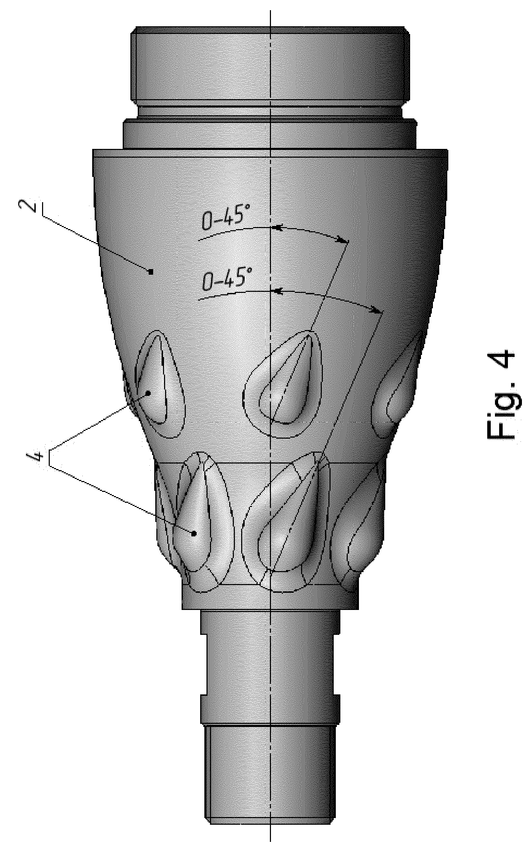

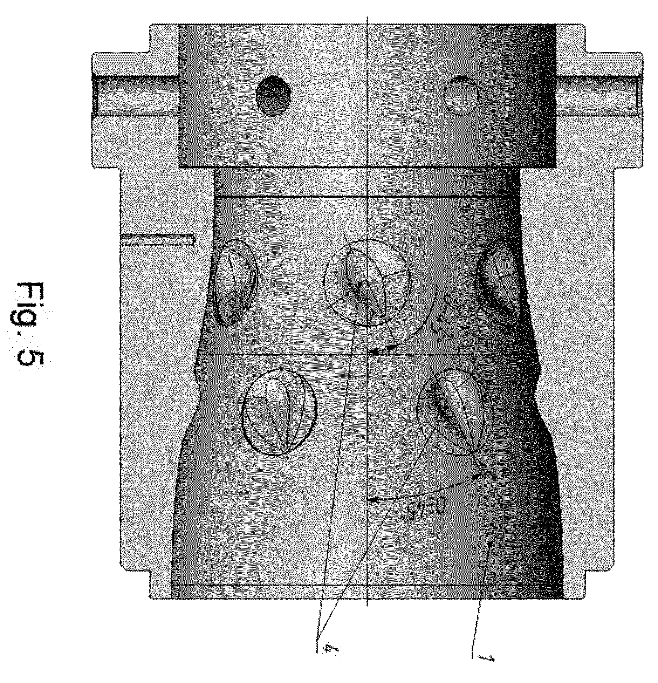

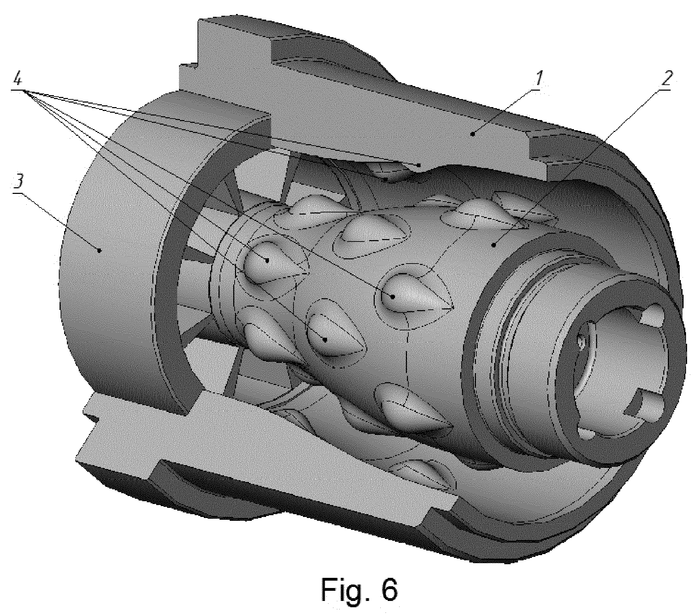

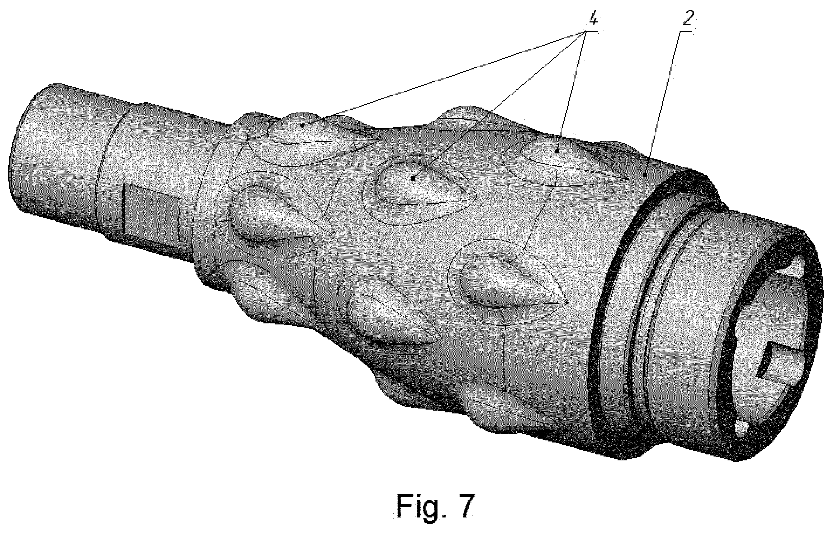

Fig. 1 illustrates a general view (with a partial cut-out) of the forming attachment in the claimed device (according to the first embodiment), Fig. 2 is a general view of a mandrel, Fig. 3 is a general view of a die (with a partial cut-out). Fig. 4 illustrates the angular distribution of the directions between the planes of symmetry of the deformation elements mounted on the mandrel and the planes passing by the axis of the same, Fig. 5 illustrates the angular distribution of the directions for the elements mounted on the die. Figs. 6 and 7 illustrate an embodiment of an attachment with additional rows of deformation elements on the mandrel.

The device for forming long hollow articles from powdered or plasticized masses comprises an extruder (not shown in figures) and a shaping attachment consisting of a die 1, a mandrel 2 and an assembly 3 for securing the mandrel 2 inside the die 1. In this case, the working surfaces of the forming attachment (a die and a mandrel in the first embodiment and a die or a mandrel in the second embodiment) are provided with one or more profiled deformation elements 4 located with a uniform circumferential pitch on the working surfaces of the die 1 and/or the mandrel 2.

According to the first embodiment of the device, all the rows of the deformation elements or a part of the same form couples of rows. In each couple of rows, the number of deformation elements 4 on the die 1 and the mandrel 2 is the same, and in each of the rows, the distances of the assembly 3 for securing the mandrel 2 to the elements 4 mounted both on its surface and on the surface of the die 1 are constant, the deformation elements 4 of the die 1 are placed with an angular displacement with respect to the mandrel 2 deformation elements 4 up to the half of the angular pitch (an embodiment without any displacement is possible as well) and with a linear displacement with respect to the elements 4 of the mandrel 2 for no more than 3/2 of the length of the element 4 (an embodiment without any displacement is possible as well).

The profiled deformation elements 4 represent protrusions of a streamlined shape on the working surface of the die 1 and/or of the mandrel 2. It is preferable to provide each one of such protrusions with a plane of symmetry.

The planes of symmetry of the deformation elements 4 in each row can coincide with the planes passing by the axis of the mandrel 2 or cross the mandrel 2 axis at angles α that do not exceed 45°. In this case, said angles in each couple of rows of the deformation elements 4 in the die 1 and in the mandrel 2 having the opposite signs.

As a particular case for building the present device, the die 1 or the mandrel 2 can be provided with one or more additional unpaired rows of deformation elements 4 (see Figs. 6 and 7). These unpaired rows can be located at one side of the couples of rows, and can be distributed between the couples of rows.

In the procedure of implementing the claimed method, the device described above (according to the first embodiment) operates as follows. A blank of plasticized material is forced from the press cavity (not shown in Figs. 1-7) through the assembly 3 for securing the mandrel 2 into an annular axisymmetric deformation region formed by the working surfaces of the mandrel 2 and the die 1 bearing the profiled deformation elements 4. In said region, additional drawing up and deformation processing of the formed material are carried out before calibrating.

The material forced through the assembly 3 for securing the mandrel 2 into the annular region between the working surfaces of the die 1 and the mandrel 2, while flowing around the profiled deformation elements 4 located as couples of rows on the die 1 and on the mandrel 2, changes repeatedly the directions and the speeds of material translation in different regions of the equipment, while the resistance of the deformation elements 4 to the rectilinear transitional motion of the material generates important speed gradients of its motion in values and in directions along the annular channel, both in radial and circumferential directions. It enables to carry out cyclic deformations of drawing out and of setting in the axial direction and in the surfaces enveloping the working surfaces of the die and the mandrel along the entire length of the annular region, cyclic deformations of setting in a radial direction as well as cyclic shearing and flexural strains having different signs, which finally leads to a uniform intensive deformation treatment of the entire volume of material before calibrating the blank.

Said deformations are generated as well, although at a lesser degree, at the flowing around the deformation elements 4 provided only on the die or only on the mandrel. Said deformations are as well generated, although at a lesser degree, if there is only one couple of rows of deformation elements 4 on the die 1 and on the mandrel 2.

The deformation treatment of material is carried out according to the following diagram.

The material supplied via the assembly 3 for securing the mandrel 2 into an annular channel between the working surfaces of the die 1 and of the mandrel moves through the first row in the first couple of profiled elements 4 located on said working surfaces. Let's consider an embodiment where the first row of profiled elements is located on the surface of the mandrel 2. While passing above the deformation element 4 protruding above the mandrel 2 surface, into a narrowing channel, the material undergoes a setting deformation in a radial direction, a drawing up deformation along the annular channel and a flexural strain in the planes passing through the mandrel 2 axis. The material undergoes the maximum values of said deformations in the regions adjacent to the planes of symmetry of the deformation elements of the mandrel 2. The flexural strain of the material in the planes passing by the axis of symmetry of the mandrel 2 and in the surfaces enveloping the mandrel 2 surface generates a modification of the material motion directions when the material flows around the profiled deformation elements 4, this motion being originated by the resistance of these elements to the rectilinear translational motion of the material. The angles of deviation of the material flow direction in the planes passing by the axis of the mandrel 2 have the maximum values in the regions adjacent to the symmetry planes of the deformation elements 4, while on the surfaces enveloping the surfaces of the die 1 and of the mandrel 2, the maximum values are in the layers of material adjacent to the surface of the mandrel 2 in the annular region. In this case, the layers of material adjacent to the working surface of the die 1 in the annular region modify insignificantly the direction of their motion, while the material motion direction in the regions adjacent to the planes passing by the axis of the mandrel 2 and presenting a deviation from the symmetry planes of the deformation elements 4 equal to the half of the circumferential pitch, practically does not change.

Such a complicated character of the material motion assigns considerable gradients of the speed of its motion in the annular channel both in radial and in circumferential directions, which in turn induces high values of the shear deformation in the material in said directions.

The material in the areas adjacent to the planes of symmetry of the deformation elements 4, after being forced through the first row of the first couple of elements, gets into the area where it undergoes a significant longitudinal setting accompanied by its expansion in the radial and circumferential directions. In this case, the material is supplied from the areas where the material layer thickness did not change at the passage by the first row of profiled deformation elements 4, to the area of the maximal constriction of the channel in the radial direction while passing by the deformation elements 4 of this couple located on the surface of the die of the second row. Passing below these elements and flowing around the last, the material undergoes the entire above mentioned set of deformations, only the signs and the distribution of these deformations through the thickness of the annular layer of material will be opposite.

Each following couple of rows of profiled elements 4 will deform the material according to the above given diagram. In this case, the first row of each following couple of deformation elements 4 will change once more the signs, the direction and the distribution of the deformations obtained by the material while passing by the second row of the previous couple of the deformation elements 4. The material deformations generated by the presence of an additional unpaired row of deformation elements can be considered according to the same diagram for one more couple of rows, where the second row of the previous couple of deformation elements will be considered as the first row.

Modifying the deviation angles of the planes of symmetry for the profiled deformation elements 4 with respect to the planes passing by the mandrel 2 axis (drawing up axis), the height of the profiled elements 4 and their shape, as well as the value of the rows of elements 4 with respect to each other along the axis of drawing up in the circumferential and longitudinal directions, one can change the value of deformations assigned to the material in the annular region, as well as the relationship between the last, which enables one to control the level of anisotropy of the material properties in the circumferential and longitudinal directions in long hollow articles produced with the use of the present invention.

A combination of deformations that the material undergoes simultaneously or successively, a cyclic change of their value, directions and signs hinder the formation, in the material forced through an annular channel, of a texture stable at an external attack. That is why, even at relatively low compacting pressures but at high deformations accumulated in the material, important displacements in different directions and with opposite signs of elements constituting the structure of the material increase the strength of binding between them on the surfaces of their contact and heal, practically completely, the defects obtained by the material at its passing by the assembly for securing the mandrel, and increase the density of the material.

The structural peculiarities of the device enable to carry out cyclic deformations of drawing up and setting in the axial direction and in the surfaces enveloping the working surfaces of the die and the mandrel along the entire length of the annular region, cyclic setting deformations in the radial direction, and cyclic shearing and flexural strains of opposite signs, which leads to a uniform intensive deformation treatment of the entire volume of the material before calibrating the blank.

In this case, the deformation elements are disposed on the die and the mandrel in a way to provide that in each row of deformation elements 4, the value of the angles α between the planes of symmetry of these elements and the axis of the mandrel can be more than 0°, and that the signs of these angles in each couple of rows on the die and the mandrel are opposite, and this leads to increase the degree of the shearing strain in the material in the planes orthogonal to the axis of drawing up and modifies the relationship between the deformations that the material undergoes. The increase of the angles α to more than 45° (α > 45°) results in an increase of the resistance to the flow of the material through the annual channel, which mainly leads only to a significant increase of the pressing effort and does not favor further increase of the treatment degree of the material.

As an embodiment of the claimed device, the die or the mandrel can be provided with additional rows of deformation elements, which is aimed as well to achieve the above described technical result.

Arranging the deformation elements only on the surface of the die or of the mandrel is aimed to achieve the above described technical result in processes that do not require a significant additional treatment of the material, for example, at drawing up degrees superior to 4-5.

Thus, the use of the claimed method for forming articles and of the device to implement the same leads to a more intensive and uniform elimination of pores and provides the "healing" of structural defects in the material passing through the annular region between the surfaces of the die and the mandrel, as well as the formation of homogeneous physicomechanical properties of the material in the entire volume of the finally shaped article.

Therefore, the claimed combination of inventions ensures the improvement of the level of physicomechanical properties of long hollows articles and the increase of the yield of good-quality products thanks to the improvement of uniformity of the material properties across the section of the article.

While drawing up tubes from powders UHMWP (ultrahigh-molecular-weight polyethylene) of the "Ticona" Company, brand GUR 4150, the use of a known and of the claimed technical solutions showed the 1.5-2-fold increase of the level of the mechanical properties of the material in obtained hollow articles, in particular, at tensile testing, the limit of elasticity increased from 10-12 MPa to 20-22 MPa, and the strength increased from 10-15 MPa to 25-27 MPa. Defectless and uniformly bodied hollow "green" blanks were produced as well from highly dispersed, medium-dispersed and bidispersed coke-pitchy compositions.

## Claims

1. Method for forming long hollow articles from powdered or plasticized masses, comprising forcing a blank through an annular axisymmetric deformation region, drawing out the material, shaping an article and calibrating the same, **characterized in that** in the process of shaping the article, the material is submitted to additional deformation processing comprising cyclic drawing up and setting deformations in the axial direction, and in the surfaces enveloping the working surfaces of the die and the mandrel along the entire length of the annular area cyclic setting deformations in the radial direction, as well as cyclic shearing and flexural strains in opposed-sign directions, the shearing strains being performed both in the planes passing through the axis of drawing up and in the planes orthogonal to said axis, the flexural strains being performed in the surfaces enveloping the working surfaces of the die and the mandrel and in the planes passing through the drawing up axis, the number of cycles for the additional deformation processing being equal to or more than one.

2. Device for forming long hollow articles from powdered or plasticized masses, comprising an extruder and a shaping attachment consisting of a die, a mandrel and an assembly for securing the mandrel inside the die, **characterized in that** working surfaces of the die and the mandrel are provided with one or more rows of profiled deformation elements, the rows located on the working surfaces of the die and the mandrel at an equal distance from the assembly for securing the mandrel or at a linear shift from each other along the mandrel axis for no more than 3/2 lengths of the deformation elements forming at least one couple of rows, in each couple of rows the deformation elements are arranged with an equal and uniform angular pitch and with a circumferential displacement of the die deformation elements with respect to the mandrel deformation elements up to the half of the circumferential pitch or without any circumferential displacement, and in each row, the distances from the profiled deformation elements to the assembly for securing the mandrel along the axis of the last are equal.

3. Device of claim 2, **characterized in that** two or more couples of rows of profiled deformation elements with the circumferential displacement of the deformation elements of each following couple of rows relative to the previous one for up to the half of an angular pitch or without any circumferential displacement are provided on the working die or mandrel surfaces.

4. Device of claim 2, **characterized in that** the symmetry planes of the deformation elements coincide with the planes passing through the mandrel axis.

5. Device of claim 2, **characterized in that** the symmetry planes of the deformation elements cross the mandrel axis at angles α that do not exceed 45°, in each couple of rows said angles at the die deformation elements and at the mandrel deformation elements having opposite signs.

6. Device of claim 2, **characterized in that** at least one couple of rows is formed by a part of rows, and at least one unpaired row is located on the die or on the mandrel, the angular pitch between the deformation elements of this at least one unpaired row being equal to the angular pitch between the deformation elements of the neighboring couple of rows, the deformation elements of at least one unpaired row being located with a circumferential displacement relative to the deformation elements of the corresponding previous row, said circumferential displacement not exceeding the half of the angular pitch, or without any displacement.

7. Device for forming long hollow articles from powdered or plasticized masses, comprising an extruder and a shaping attachment consisting of a die, a mandrel and an assembly for securing the mandrel inside the die, **characterized in that** the working surfaces of the die and the mandrel are provided with one or more rows of profiled deformation elements at a uniform angular pitch.

8. Device of claim 7, **characterized in that** two or more couples of rows of profiled deformation elements located with an equal angular pitch and with a circumferential displacement of the elements of each following row relative to the previous one for up to the half of an angular pitch or without any circumferential displacement are arranged on the working die or mandrel surfaces.

9. Device of claim 7, **characterized in that** the symmetry planes of the deformation elements coincide with the planes passing through the mandrel axis. or cross the mandrel axis at angles α that do not exceed 45°.

10. Device of claim 7, **characterized in that** the symmetry planes of the deformation elements cross the mandrel axis at angles α that do not exceed 45°.

11. Device of claim 10, **characterized in that** when the working surface of the die or the mandrel contains two or more rows of deformation elements, the sign of the angle α in each following row changes to the opposite one.
